# EUROPEAN PATENT APPLICATION

(11) **EP 2 169 378 A1**
(43) Date of publication of application: **31.03.2010**
(21) Application number: 08794053.2
(22) Date of filing: 03.07.2008
(51) Int. Cl.: G01N 1/28

(54) **METHOD FOR PREPARING SAMPLES FOR QUANTITATIVELY AND QUALITATIVELY DETERMINING THE PRECIOUS METAL CONTENT IN PRODUCTS OF PROCESSING OF POTASSIUM AND MAGNESIUM ORES**

(30) Priority: 24.07.2007 RU 2007128507
(71) Applicant: Zakrytoe Akcionernoe Obshestvo "Uralkaliy-technologiya", Permsky krai 618426 (RU)
(72) Inventor: SMETANNIKOV, Andrei Filippovich, Perm 614061 (RU); SINEGRIBOV, Viktor Andreevich, Moscow 125413 (RU); LOGVINENKO, Izabella Alekseevna, Moscow 115409 (RU); NOVIKOV, Pavel Urievich, Moscow 121471 (RU); SEDYKH, Evelina Maksimovna, Moscow 109443 (RU); SHANINA, Svetlana Nikolaevna, Syktyvkar 167021 (RU); KRASNOSHTEIN, Arkadiy Evgenievich, Perm 614039 (RU)
(74) Representative: Hatzmann, Martin
(86) International application number: PCT/RU2008/000436
(87) International publication number: WO 2009/014473

(57) **Abstract**

The invention relates to analytical chemistry and technology for processing clay0salt waste (slurries) of potassium-processing factories. The inventive method is based on the analysis of the totality of tested material and consists of annealing the nanoparticles of precious metal (Au, pt, Pd) organic compounds at a temperature ranging from 600 to 950 °C, in the presence of a chloride agent in the form of potassium chlorides (KCl) or sodium chlorides (NaCl) and in producing the acid-soluble compounds of said metals. The sample is exposed to the entire cycle of technological conversion: 1) chloridising annealing; 2) leaching with weak mineral acid solutions; 3) sorption of precious metal compounds on the industrial sorbent AM-2B 4 from the solution obtained after leaching and 4) desorption. A tradable solution obtained at the end of said cycle is analyzed for precious metal content. The invention makes it possible to use the test portion which is required for a given test stage as opposed to non-representative test portions of 3 - 30 g which are used for conventional analytical methods and to avoid non incorporation of the tested material in the analysis.

## Description

This invention falls within the realms of analytical chemistry and technology of processing of argillo-saline waste (slurry) of potassium-producing enterprises and may be applied for quantity and quality determination of content of precious [noble] metals (Au, Pt, Pd) recovered from water insoluble residue of slurries, salt-containing rocks and products of their processing. There are some known methods devised by the Central Laboratory for Substance Analysis of the Vernadsky Institute of Geochemistry &. Analytical Chemistry ( 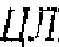 *AB* 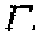 *EOX* 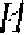 ), such as "Precious Metals. Determination of Their Content in Natural Subjects by Method of Electrothermic Atomic Absorption (EAA)" (published in 1997) and "Precious Metals. Determination of Their Content by Method of Atomic Emission with the Use of Plasma Fixed by Induction" (AES-ISP) and Method of Atomic Absorption (AAS)" (published in 1997), involving the use of 1-30 g weight of the material being analyzed, its decomposition and transformation into solution, selective sorption concentrating from precious metal solution, desorption and subsequent analysis of desorption product. In this case, preparation (decomposition or "mineralization") of sample to be analyzed involves the following operations.

To make analysis it is necessary to put a previously weighed one-gram-sample in fluoroplastic sleeve [cup] (150 ml) of titanium autoclave and pour 4 ml of nitric acid (HNO₃) + 4 ml of hydrochloric acid (HCl) + 4 ml of hydrogen peroxide (H₂O₂) into the sample. Leave the mixture for 4 hours at 220°C. Then transfer the contents of the sleeve [cup] into a glass-carbon cup, add 15 ml of hydrofluoric acid (HF), place the mixture on hot plate (stove) and evaporate to dryness. To remove vapours of fluorine add 5 ml of hydrochloric acid (HCl), evaporate the mixture to dryness and mix in 15 ml of aqua regia (in the ratio of 1 HNO₃ to 3 HCl). Evaporate the mixture to wet [moist] salts, add 5 ml of hydrochloric acid (HCl) and evaporate again to wet [moist] salts so that to remove all vapours of nitrogen dioxide (NO₂). Transfer the contents to solution using binormal hydrochloric acid (2N HCl). Next step is extraction (methyl isobutyl ketone) to determine the content of gold (Au) or sorption (Polyorgs-IV sorbent) to determine the content of platinum (Pt) and palladium (Pd).

The weakness of these methods is unreliability of results incident to small weight being analyzed, considering that precious metal compounds are nonuniformly distributed in water-insoluble slurries or in salt-containing rocks and (or) products of their processing. Presence of technotronic organic substances has an additional effect on the nonuniform distribution.

The invention covered by the patents helps to solve the problem of highly reliable results.

Precious metals present in salt-containing rocks of Verkhnekamskoje field are represented by organic compounds of Au, Pt and Pd incorporated into water-insotuble residue of salt-containing rocks, and in case of ore processing - into water-insoluble residue of argillo-saline waste (slurry).

Determination of content of precious metals in reference rock, its water-insoluble residue and water-insoluble residue of slurry present a serious problem. The point is that when water-insoluble residue is separated from salt (saline) matrix, structure and composition of its organic component are modified which is manifested as blocking of organic compounds of Au, Pt and Pd, their aggregation, modification of composition and rearrangement in water-insoluble residue of salt-containing rock or slurry. Presence of technotronic organic substances (amines and polyacrylamines) speeds up and intensifies this process. As a consequence the sampling method and correct analysis (assaying) of precious metals in water-insoluble residue of salt-containing rocks and products of their processing do not work properly. The main challenge in developing industrial technology of slurry processing to recover precious metals is to determine the content of precious metals (Au, Pt, Pd) in reference raw material (slurry), middle-products (cinders, cakes, productive solutions) and main product (commercial solution). This problem is especially difficult.

In the first place, it is necessary to develop a method of breaking-down of blocked compounds and, second, to preclude the influence of attendant elements which can be broken down together with precious metals. For instance, solutions obtained when cinders are leached (hereinafter productive solution), contain a considerable amount of attendant metals, such as content of chalcophile elements (Co, Ni, Cu, Zn, As, Pb, Sb, Bi) (in terms of reference raw material) is 0.5 g/ton and more; content of zinc amounts to as much as 370 g/ton, content of rare-earth elements (14 elements) is at least 0.66 g/ton. Content of cerium, rare metals, alkali-earth elements, uranium (U) and thorium (Th) is 32 g/ton, 3 g/ton, 100 g/tons, 5 g/ton and 6 g/ton, respectively. The analysis of productive solution by ISP and EAA methods gives mass-spectrum superposition in the former case, and legitimate [valid] signal suppression in the latter case. As a result, the content of precious metals (Au, Pt, Pd) appears to be undervalued.

On the other hand, rearrangement of precious metal (Au, Pt, Pd) compounds and their aggregation may cause the absence of such compounds in 3-30 gram-weight [previously weighed sample] to be analyzed, i.e. the weight [sample] will not be representative at all.

Based on the special features of the material being analyzed, a whole system of techniques united as the notion [idea] of "technological analysis" was developed. The basic constituent of this system is method of preparation of sample for analysis. Its basic dissimilarity from traditional method is not in complete decomposition of sample to solution, but in selective recovery of precious metal compounds [Au, Pt, Pd) from the weight [previously weighed sample] with the use of chloridizing roasting and their transformation into acid-soluble form by subsequent leaching of these metals into solution through their sorption and desorption. The product of desorption is analyzed by traditional methods (EAA, AES-ISP, etc).

To get the above technological result of preparation of samples of insoluble residue of salt-containing rocks and products of their processing for quality and quantity of precious metal content, including roasting, sorption and desorption of weight [previously weighed sample] of the material being analyzed is distinctive in that the weight is taken precisely to make commercial solution any part of which is representative for the whole sample of the material being analyzed. The weight is subjected to chloridizing roasting at a temperature of 600-950°C after which it might be possible to run selective dissolution of acid-soluble compounds of precious [noble] metals formed on roasting, sorption of the solution of precious metal compounds and desorption.

The main feature of this method which differentiates it from the similar one is that the weight is taken precisely to make commercial solution any part of which is representative for the whole sample of the material being analyzed. The weight is subjected to chloridizing roasting at a temperature of 600-950°C after which it might be possible to run selective dissolution of acid-soluble compounds of precious [noble] metals formed on roasting, sorption of the solution of precious metal compounds and desorption.

According to this method the whole amount of material is subjected to the analysis during which nanoparticles of organic compounds of precious metals (Au, Pt and Pd) are roasted by chloridizing roasting at a temperature of 600-950°C in the presence of chloride agent which can be chloride of potassium (KCI) and chloride of sodium (NaCl), and the metals in question form acid-soluble compounds which may be leached with solutions of mineral acids in distinction to traditional methods when the weight [previously weighed sample] being analyzed is completely transferred into solution, that is to say, selective dissolution of precious metals takes place. The sample is subjected to the complete cycle of technological transformation: 1) chloridizing roasting; 2) leaching with weak solutions of mineral acids; sorption from the obtained solution of precious metal compounds on sorbent AM-2B (OST 95.291-86 - Weakly Basic Anion-Exchange Resin Obtained through Successive Reactions of Chloromethylation and Amylation with Dimethylamine of Macroporous Styrene Copolymer and Divinylbenzol); 4) desorption. At the end of the cycle we obtain the commercial solution to analyze for the content of precious metal, i.e. the "recovered" content of precious metal. The advantage of method is using of the weight required for a certain stage of analysis as distinct from non-representative weights of 3-30 g used in traditional methods of analysis which enables one to rule out the possibility that the material being analyzed will be excluded from consideration.

To illustrate, we take 10 kg of water-insoluble residue, add 10-25% of chloride of potassium (KCl) and chloride of sodium (NaCl) and stir. Then we carry out, chloridizing roasting at a temperature of 600-950°C in a muffle furnace. Afterwards we allow the "cinder" to cool, grind it (divide it finely) and put in reaction vessel to make selective dissolution of acid-soluble compounds of precious metals (Au, Pt, Pd) formed by roasting of organic compounds of Au, Pt and Pd in hydrochloric acid in the presence of chloride of potassium (KCl) and chloride of sodium (NaCl) for 3-4 hours, with stirring. Then we filter the pulp, transfer (pump over) the filtrate into Pachuca reactor, charge the sorbent and carry out the sorption stirring with an air jet. Then we make washing of the sorbent and desorption. The result of desorption is commercial solution and represents the sample being analyzed. Any part of this solution is representative for the whole sample.

Thus, based on the results, we may conclude that the methodological approach towards determination of content of precious metals (Au, Pt, Pd) in salt-containing rocks and products of their processing has been changed.

## Claims

1. A method of preparation of samples of insoluble residue of salt-containing rocks and products of their processing for quality and quantity of precious metal content, including preparation of preciously weighted sample of the material being analyzed, roasting, sorption and desorption, **characterized in that** the whole sample of the material being analyzed is subjected to chloridizing annealing at a temperature of 600 - 950 °C followed by selective dissolution of compounds in mineral-salt solution followed by sorption and desorption.
